# EUROPEAN PATENT SPECIFICATION

(11) **EP 3 712 422 B1**
(45) Date of publication and mention of the grant of the patent: **11.10.2023**
(21) Application number: 19164164.6
(22) Date of filing: 20.03.2019
(51) Int. Cl.: F03D 1/06, F03D 80/00

(54) **ROTOR BLADE FOR A WIND TURBINE**
ROTORBLATT FÜR EINE WINDTURBINE
PALE DE ROTOR POUR ÉOLIENNE

(43) Date of publication of application: 23.09.2020
(73) Proprietor: Siemens Gamesa Renewable Energy A/S, 7330 Brande (DK)
(72) Inventor: Androuin, Guillaume, 9000 Aalborg (DK); Nielsen, Mogens, 9220 Aalborg (DK)
(74) Representative: SGRE-Association

(56) References cited:
- EP-A1- 1 342 009
- EP-A1- 2 722 522
- DE-A1-102008 048 617
- JP-A- 2005 105 916
- US-A1- 2010 143 134
- US-A1- 2015 064 003

## Description

The invention relates to a rotor blade for a wind turbine, comprising an at least partially hollow blade body extending from a root to a tip, which blade body is provided with at least one drain hole connecting the hollow inner with the outer surrounding, which drain hole is positioned in an area close to the tip.

A wind turbine usually comprises several rotor blades attached to a hub. When wind acts on the rotor blades the hub starts to rotate and drives a generator connected to the hub for producing electrical energy.

A rotor blade usually comprises an at least partially hollow blade body, which extends from a root, which is fixed to the hub, to a tip. Over its length the blade body changes its cross section from a usually circular cross section at the root to an air foil cross section.

As the blade body is hollow water can accumulate in the blade body due to condensation or a direct ingress, which water needs to be drained. If the water is not drained it may freeze and damage the rotor blade.

To drain the water it is known, see for example EP 1 607 623 A2, to provide at least one drain hole in the area of the tip, which connects the hollow inner of the rotor blade body with the outer surrounding. Through this drain hole the water can be drained from the inner to the outer surrounding. Such a drain hole, see EP 1 607 623 A2, has a very small diameter of less than 1 cm, preferably 5 mm.

The drain hole in the rotor blade disclosed in EP 1 607 623 A2 has the only purpose to drain water. For avoiding that dirt or loose pieces in the hollow blade body clog the drain hole a net or the like is provided in the inner of the blade body at a position spaced apart from the drain hole, which net is water permeable but holds back any dirt or material which may clog the drain hole. For allowing a removal of any collected material by hand a hand hole is provided which is closed by means of a lid, through which hand hole for maintenance purpose the worker can reach with his hand into the inner of the hollow blade body for cleaning the net.

Documents EP2722522 and JP2005105916 are additional prior art examples of wind turbine blades with a water drain hole.

It is an object of the invention to provide an improved wind turbine rotor blade as disclosed in the appended set of claims.

For solving the problem a rotor blade as depicted above is characterised in that the drain hole is closed with a removable plug-like closing means having at least one drain bore.

While in the prior art the drain holes are bores with a very small diameter, which are permanently open to the surrounding, the invention proposes to provide a drain hole into which a removable plug-like closing means is inserted. This closing means has at least one drain bore, which is permanently open and which connects the inner of the blade body to the outer surrounding allowing to drain any accumulated water. So this plug-like closing means permanently allows for draining water, while on the other hand it is possible to provide a way larger drain hole in the blade body, which drain hole preferably has a diameter of at least 10 mm, preferably of at least 20 mm and especially of at least 25 mm. As the plug-like closing means is removable, it is at any time possible to remove it from the drain hole and open the drain hole, which provides a relatively large access hole to the inner of the blade body. This makes the drain hole a multifunctional hole, which does not only act as a drain hole, but also allows to for example perform a camera inspection by inserting a small camera like an endoscope through the drain hole in the inner of the blade body, or to remove any dirt or pieces which have accumulated in the tip area for example by means of a vacuum cleaner comprising a hose which can be inserted through the drain hole in the inner of the blade body or even to remove any items by hand. Any such item may for example be a piece of a vacuum bag arranged in the inner of the blade body or the like. Furthermore it is also possible to press air through this drain hole into the inner of the blade body during the manufacturing process, when a mandrel is pulled out of the blade body usually creating a negative pressure in the tip area which makes the pulling of the mandrel cumbersome. By pressing air in the blade body from the tip end the mandrel can be pulled easily.

After finishing the maintenance the drain hole is simply closed again by inserting the plug-like closing means again, closing the large drain hole but still providing a possibility for draining water through the at least one drain bore in the closing means.

As mentioned, the drain hole has preferably a diameter of at least 10 mm, preferably of at least 22 mm and especially of at least 25 mm, depending on the size of items which shall be connected to the drain hole or shall be inserted into the drain hole. A diameter of for example 40 or 50 mm or even up to 100 mm is also possible.

While it is possible that the plug-like closing means comprises only one drain bore, usually provided in the center of the circular closing means which is inserted in the circular drain hole, it is certainly possible to provide multiple drain bores, which perforate the closing means.

The plug-like closing means itself preferably comprises a cylindrical body having a head, preferably a lens-shaped head, with the at least one drain bore extending through the body and the head. The cylindrical body is inserted into the drain hole and preferably clamps at the inner of the drain hole or extends through the drain hole and clamps at the inner shoulder. At least one central bore extends through the body and through the head, which rests on the outside of the blade body, preferably in a recess, so that it is smoothly integrated into the outer surface of the blade body. This head may have a flat surface or design, it preferably may also have lens-shaped design or outer surface.

If multiple drain bores are provided, these multiple bores are provided in the head, while the cylindrical body comprises only one central bore communicating with all multiple drain bores.

As already mentioned, the closing means, when mounted, preferably engages with its head, preferably its lens-shaped head into a recess formed in the outer surface of the blade body, so that it is smoothly integrated in the outer body surface.

A fixation and/or sealing material may be arranged at the bottom of the head, which fixation and/or sealing means may be an elastic or sticky tape which abuts the adjacent surface of the blade body respectively the recess.

The cylindrical body of the plug-shaped closing means may comprise one or more axially extending slits, which make the cylindrical body more elastic for allowing it to firmly fit into the drain hole.

Preferably the drain bore is at least partially filled with a noise reducing and water permeable means, which means is preferably a foam piece. This noise reducing means reduces noise which may be caused by the open hole when the blade rotates, but does not hamper the draining of the water, as it is water permeable. As the water is driven out due to the centrifugal forces when the rotor blades rotate, the water is pressed through this means.

For firmly fixing the plug-like closing means at the blade body respectively in the drain hole the closing means preferably has at least one engagement means engaging with the blade body for fixing the closing means in the drain hole.

This engagement means may comprise at least one snap-in means clamping towards the inner of the drain bore or snapping at the inner shoulder of the drain bore. So for fixing the closing means it is simply firmly pressed in the drain hole, with the engagement means, for example one or several clamping rips or lips or the like extending radially from the circular body, firmly clamp at the inner circumference of the drain bore. The engagement means or snap-in means may also comprise one or more snap noses provided in the end of the cylindrical body, which nose or noses engage behind the inner shoulder of the drain bore.

As the clamping means is preferably made of a polymer, it has a certain elasticity allowing a firm clamp or snap fixation on the one hand, but also the simple removal of the plug-like means on the other hand.

Aside the rotor blade itself the invention furthermore relates to a wind turbine, comprising a rotor with one or more rotor blades as depicted above.

Further advantages of the invention become apparent from the following detailed description and the respective drawings. The drawings show:
- Fig. 1: shows a principle partial drawing of an inventive rotor blade,
- Fig. 2: an enlarged view of an inserted plug-like closing means in a first embodiment,
- Fig. 3: an enlarged view of an inserted plug-like closing means in a second embodiment,
- Fig. 4: a perspective view of a plug-like closing means of a first embodiment,
- Fig. 5: a perspective view of a plug-like closing means of a second embodiment,
- Fig. 6: a side view of the plug-like closing means of fig. 5,
- Fig. 7: a perspective view of a plug-like closing means of a third embodiment,
- Fig. 8: a perspective view of a plug-like closing means of a fourth embodiment,
- Fig. 9: a cross sectional view of a plug-like closing means of a fifth embodiment,
- Fig. 10: a principle drawing of the inventive rotor blade during manufacturing when the mandrel is pulled out, and
- Fig. 11: a principle drawing of a wind turbine.

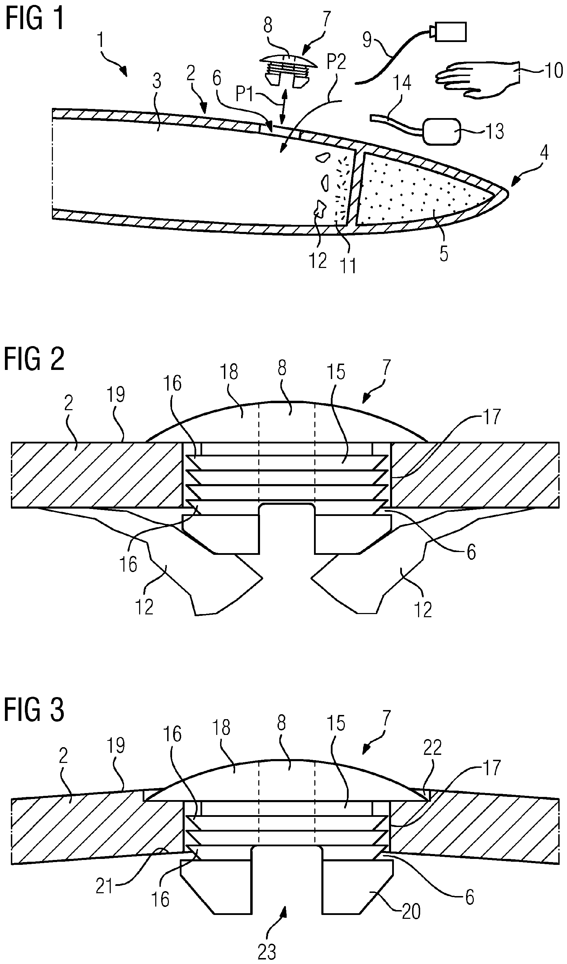

Fig. 1 shows a partial principle sketch of an inventive rotor blade 1, comprising a hollow blade body 2 with a hollow inner 3, which runs from a (not shown) root at the left end of the rotor blade 1 to a tip 4. The tip 4 is also hollow but for example filled with a stiffening material 5.

In the blade body 2 at least one drain hole 6 is provided having a circular cross section. This drain hole 6 allows access into the inner 3 of the blade body 2. It can be closed by inserting a plug-like closing means 7 which is after insertion also removable, as depicted by means of a double arrow P1. The plug-like closing means 7 comprises at least one drain bore 8, which is shown by the dashed lines in fig. 1.

So the drain hole 6 can be closed, but can also be opened for maintenance purpose or the like, as shown in fig. 1. During this maintenance purpose (see arrow P2) it is for example possible to insert an endoscopic camera 9 for a camera inspection of the inner 3 of the blade body 2, or to grab with a hand 10 into the inner 3 for removing dirt 11 or loose pieces 12 maybe from a vacuum bag or the like. Finally it is possible to attach a vacuum cleaner 13 respectively its hose 14 to the blade body 2 and to suck any dirt 11 or pieces 12 out of the inner 3 through the drain hole 6. The endoscopic camera 9, the hand 10 and the vacuum cleaner 13 are only shown in principle but not in the real size.

The drain hole 6 itself may have a relatively large diameter, the diameter is at least 10 mm, preferably at least 20 mm and most preferably at least 25 mm. It may also have a remarkably larger diameter of for example 50 mm, 80 mm, or 100 mm. As the drain hole 6 is closed by the plug-like closing means 7 it is closed during operation of the wind turbine avoiding any noise or avoiding any dirt or water entering through the hole, while water can be drained through the drain bore 7. As said, for maintenance purposes the plug-like closing means 7 may easily be removed.

Fig. 2 shows a first embodiment with a more detailed plug-like closing means 7. This closing means 7 comprises a cylindrical body 15 having an engagement means 16 like a clamping or snap-in outer structure with several clamping or snapping ribs being provided at the outer circumference of the cylindrical body 13. The engagement means 16 like the snap-in or clamping means respectively ribs firmly clamp against the inner circumference 17 of the drain hole 6 for firmly fixing the plug-like closing means 7 in the drain hole 6.

The plug-like closing means 7 further comprises a head 18, in this embodiment a lens-shaped head, which abuts against the outer surface 19 of the blade body 2. So it is obvious that this plug-like closing means 7 can easily be pushed and fixed in the drain hole 6, but may also easily be removed again, as it is, like in all embodiments, preferably made of polymer respectively plastic.

As fig. 2 shows, loose pieces 12 have accumulated in the area of the drain hole 6, which, when the plug-like closing means 7 is removed, can easily be taken out of the inner 3 of the blade body 2.

Fig. 3 shows another embodiment of a plug-like closing means 7, which again comprises a cylindrical body 15 with respective engagement means 16 like circular ribs, which clamp against the inner circumference 17 of the drain hole 6. In this embodiment at the inner end of the plug-like closing means the engagement means 16 comprise a snapping shoulder 20, which engages behind the shoulder 21 surrounding the drain bore 6. At the other end of the plug-like closing means 7 a lens-shaped head is provided, which engages into a recess 22 provided in the outer surface 19 of the blade body 2, so that the lens-shaped head 16 very smoothly is fitted into the surface 19.

As also shown in this embodiment, the circular body 15 is provided with at least two axial slits 23 providing a certain elasticity of the circular body 15 for an easy insertion into the drain bore 6.

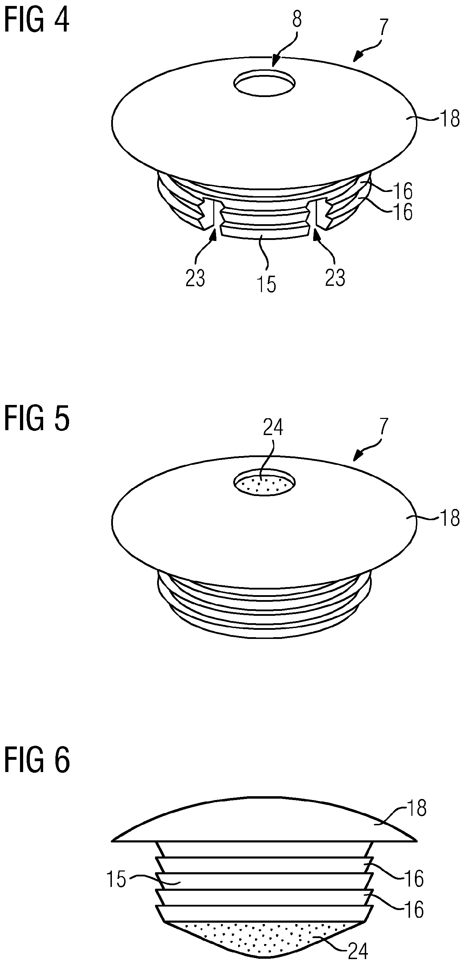

Fig. 4 shows a perspective view of a first embodiment of a plug-like closing means 7 comprising the cylindrical body 15 with the engagement means 16 in form of several circular ribs and the slits 23. Also shown is the lens-shaped head 18 and the drain bore 8, which extends through the head 18. The circular body 15, as shown, is hollow respectively comprises a large central bore, which communicates with the respective bore or opening in the head 18 defining the drain bore 8.

In the embodiment of figures 5 and 6 the plug-like closing means 7 also comprises a respective circular body 15 with the respective engagement means 16 in form of ribs and a lens-shaped head 18. Here the hollow circular body 15 is filled with a noise reducing, but water permeable means 24, preferably an open foam piece. This means 24 is inserted into the large central bore of the circular body 15 and extends until the inner bottom side of the head 18.

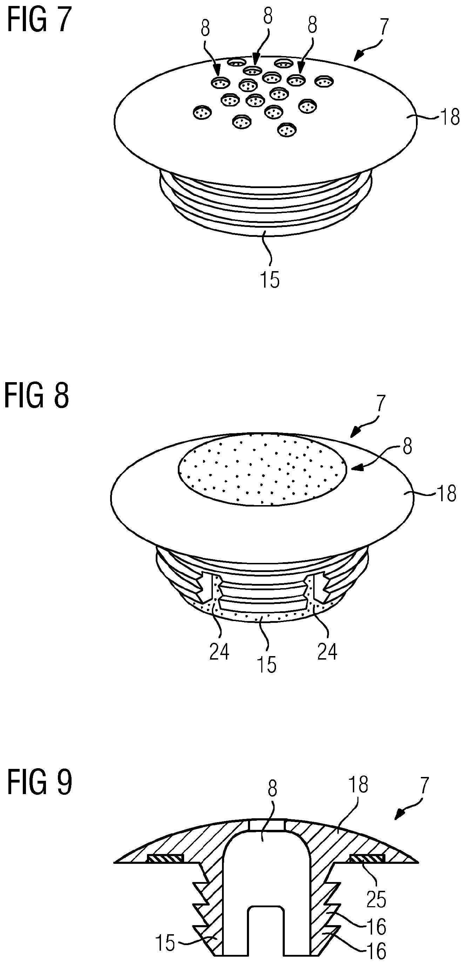

Another embodiment of a plug-like closing means 7 is shown in fig. 8. Here the lens-shaped head 18 comprises several drain bores 8, which communicate with the central bore of the cylindrical body 15.

Finally in the embodiment of fig. 8 a very large drain bore 8 is provided in the lens-shaped head 18. Again a noise reducing, but water permeable means 24 in form of a foam piece is inserted into the closing means 7, which fills the central bore in the circular body 15 and the respective bore in the head 18.

Fig. 9 shows an embodiment of a plug-like closing means 7 in a cross sectional view. At the bottom side of the lens-shaped head 18 a fixation and/or sealing means 25 like a tape or the like is provided, which abuts at the outer surface of the blade body 2, for example of the surface of the recess 22 or the like. In this embodiment also the drain hole 8 extending through the whole closing element 7 is shown.

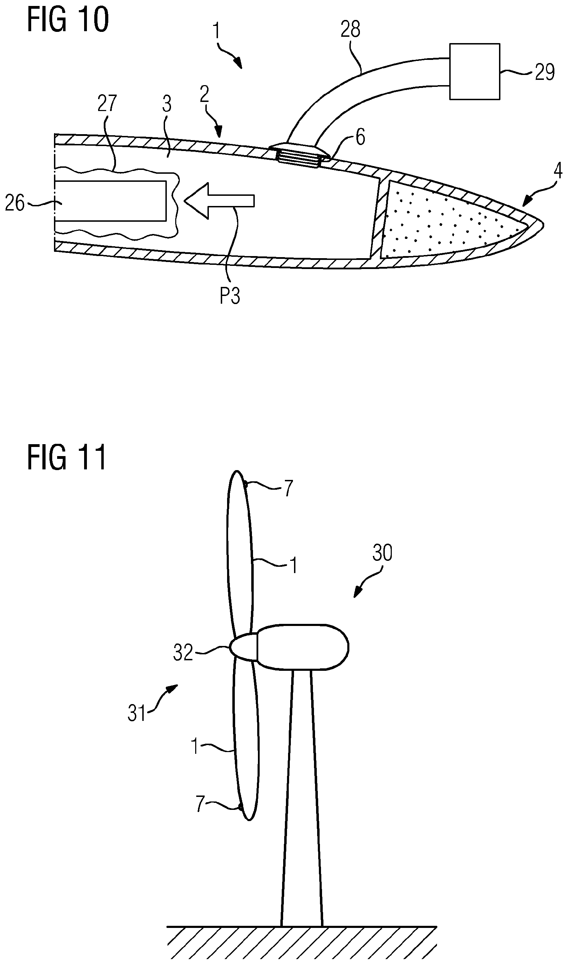

Fig. 10 shows a situation, when the rotor blade 1 respectively the blade body 2 is produced. A mandrel 26 used for forming the hollow blade body 2 and which comprises a vacuum bag 27 is pulled out of the hollow blade body 2, as shown by the arrow P3. As this pulling leads to a negative pressure at the tip side it is possible to attach an air hose 28 attached to an air pump 29 to the drain hole 6 for pumping air in the inner 3 of the blade body 2 to avoid any negative pressure and to support the pulling action.

Finally fig. 11 shows a wind turbine 30 comprising a rotor 31 with a hub 32, to which in this embodiment several rotor blades 1 according to the invention are attached. Each rotor blade comprises at least one plug-like closing means 7 inserted into a respective drain hole 6.

Although the present invention has been described in detail with reference to the preferred embodiment, the present invention is not limited by the disclosed examples from which the skilled person is able to derive other variations without departing from the scope of the invention as defined by the appended set of claims. v.

## Claims

1. Wind turbine rotor blade, comprising an at least partially hollow blade body (2) extending from a root to a tip (4), which blade body (2) is provided with at least one drain hole (6) connecting the hollow inner (3) with the outer surrounding for draining accumulated water from the inner (3) to the surrounding through the drain hole (6), which drain hole (6) is positioned in an area close to the tip (4), **characterised in that** the drain hole (6) is closed with a removable plug-like closing means (7) having at least one drain bore (8) for draining the water, wherein the plug-like closing means (7) has at least one engagement means (16) engaging with the blade body (2) for fixing the closing means (7) in the drain hole (6).

2. Wind turbine rotor blade according to claim 1, **characterising in that** the drain hole (6) has a diameter of at least 10 mm, preferably of at least 20 mm and especially of at least 25 mm.

3. Wind turbine rotor blade according to claim 1 or 2, **characterised in that** the plug-like closing means (7) is provided with multiple drain bores (8).

4. Wind turbine rotor blade according to one of the preceding claims, **characterised in that** the plug-like closing means (7) comprises a cylindrical body (15) and a, preferably lens-shaped, head (18) with the at least one drain bore (8) extending through the body (15) and the head (18).

5. Wind turbine rotor blade according to claim 4, **characterised in that** the multiple drain bores (8) are provided in the head (18), while the cylindrical body (15) comprises only one central bore communicating with the multiple drain bores (8).

6. Wind turbine rotor blade according to claims 4 or 5, **characterised in that** the closing means (7), when mounted, engages with its head (18) into a recess (22) formed in the outer surface (19) of the blade body (2).

7. Wind turbine rotor blade according to one of the claims 4 to 6, **characterised in that** a fixation and/or sealing material (25) is arranged at the bottom of the head (18) .

8. Wind turbine rotor blade according to one of the claims 4 to 7, **characterised in that** the cylindrical body (15) comprises one or more axially extending slits (23).

9. Wind turbine rotor blade according to one of the preceding claims, **characterised in that** the at least one drain bore (8) is at least partially filled with a noise reducing and water permeable means (24).

10. Wind turbine rotor blade according to claim 9, **characterised in that** the means (24) is a foam piece.

11. Wind turbine rotor blade according to one of the preceding claims, **characterised in that** the engagement means (16) comprises at least one snap-in means or clamping means clamping towards the inner of the drain bore (6) or clamping at the inner shoulder of the drain bore (6).

12. Wind turbine rotor blade according to one of the preceding claims, **characterised in that** the closing means (7) is made of a polymer.

13. Wind turbine, comprising a rotor (31) with one or more rotor blades (1) according to one of the preceding claims.

## Patentansprüche

1. Windkraftanlagenrotorblatt, umfassend einen zumindest teilweise hohlen Blattkörper (2), der sich von einer Wurzel zu einer Spitze (4) erstreckt, wobei der Blattkörper (2) mit mindestens einer Ablaufbohrung (6) versehen ist, die den hohlen Innenraum (3) mit der Außenumgebung zum Ablassen des angesammelten Wassers vom Innenraum (3) zur Umgebung durch die Ablaufbohrung (6) verbindet, wobei die Ablaufbohrung (6) in einem Bereich in der Nähe der Spitze (4) angeordnet ist, **dadurch gekennzeichnet, dass** die Ablaufbohrung (6) durch eine entfernbare stopfenartige Verschlusseinrichtung (7) verschlossen ist, die mindestens eine Ablaufbohrung (8) zum Ablassen des Wassers aufweist, wobei die stopfenartige Verschlusseinrichtung (7) mindestens eine Eingriffseinrichtung (16) aufweist, die in den Blattkörper (2) eingreift, um die Verschlusseinrichtung (7) in der Ablassbohrung (6) zu fixieren.

2. Windkraftanlagenrotorblatt nach Anspruch 1, **dadurch gekennzeichnet, dass** die Ablaufbohrung (6) einen Durchmesser von mindestens 10 mm, vorzugsweise von mindestens 20 mm und insbesondere von mindestens 25 mm, aufweist.

3. Windkraftanlagenrotorblatt nach Anspruch 1 oder 2, **dadurch gekennzeichnet, dass** die stopfenartige Verschlusseinrichtung (7) mit mehreren Ablaufbohrungen (8) versehen ist.

4. Windkraftanlagenrotorblatt nach einem der vorstehenden Ansprüche, **dadurch gekennzeichnet, dass** die stopfenartige Verschlusseinrichtung (7) einen zylindrischen Körper (15) und einen, vorzugsweise linsenförmigen, Kopf (18) umfasst, wobei sich die mindestens eine Ablaufbohrung (8) durch den Körper (15) und den Kopf (18) erstreckt.

5. Windkraftanlagenrotorblatt nach Anspruch 4, **dadurch gekennzeichnet, dass** die mehreren Ablaufbohrungen (8) im Kopf (18) vorgesehen sind, während der zylindrische Körper (15) nur eine mittige Bohrung umfasst, die mit den mehreren Ablaufbohrungen (8) kommuniziert.

6. Windkraftanlagenrotorblatt nach Anspruch 4 oder 5, **dadurch gekennzeichnet, dass** die Verschlusseinrichtung (7) bei der Montage mit ihrem Kopf (18) in eine in der Außenfläche (19) des Blattkörpers (2) ausgebildete Aussparung (22) eingreift.

7. Windkraftanlagenrotorblatt nach einem der Ansprüche 4 bis 6, **dadurch gekennzeichnet, dass** ein Fixierungs- und/oder Dichtungsmaterial (25) an der Unterseite des Kopfes (18) angeordnet ist.

8. Windkraftanlagenrotorblatt nach einem der Ansprüche 4 bis 7, **dadurch gekennzeichnet, dass** der zylindrische Körper (15) einen oder mehrere sich axial erstreckende Schlitze (23) umfasst.

9. Windkraftanlagenrotorblatt nach einem der vorstehenden Ansprüche, **dadurch gekennzeichnet, dass** die mindestens eine Ablaufbohrung (8) zumindest teilweise mit einer geräuschreduzierenden und wasserdurchlässigen Einrichtung (24) gefüllt ist.

10. Windkraftanlagenrotorblatt nach Anspruch 9, **dadurch gekennzeichnet, dass** die Einrichtung (24) ein Schaumstoffteil ist.

11. Windkraftanlagenrotorblatt nach einem der vorstehenden Ansprüche, **dadurch gekennzeichnet, dass** die Eingriffseinrichtung (16) mindestens eine Einrasteinrichtung oder eine Einspanneinrichtung umfasst, die zum Inneren der Ablaufbohrung (6) hin einspannt oder an der inneren Schulter der Ablaufbohrung (6) einspannt.

12. Windkraftanlagenrotorblatt nach einem der vorstehenden Ansprüche, **dadurch gekennzeichnet, dass** die Verschlusseinrichtung (7) aus einem Polymer gefertigt ist.

13. Windkraftanlage, umfassend einen Rotor (31) mit einem oder mehreren Rotorblättern (1) nach einem der vorstehenden Ansprüche.

## Revendications

1. Pale de rotor d'éolienne, comprenant un corps de pale (2) au moins partiellement creux s'étendant depuis une emplanture vers une pointe (4), lequel corps de pale (2) est pourvu d'au moins un trou de drain (6) raccordant l'intérieur (3) creux à l'environnement externe pour drainer l'eau accumulée depuis l'intérieur (3) vers l'environnement à travers le trou de drain (6), lequel trou de drain (6) est positionné dans une zone proche de la pointe (4), **caractérisée en ce que** le trou de drain (6) est fermé avec un moyen de fermeture (7) amovible de type bouchon ayant au moins un alésage de drain (8) pour drainer l'eau, le moyen de fermeture (7) de type bouchon ayant au moins un moyen d'engagement (16) s'engageant avec le corps de pale (2) pour la fixation du moyen de fermeture (7) dans le trou de drain (6).

2. Pale de rotor d'éolienne selon la revendication 1, **caractérisée en ce que** le trou de drain (6) présente un diamètre d'au moins 10 mm, préférablement d'au moins 20 mm et spécialement d'au moins 25 mm.

3. Pale de rotor d'éolienne selon la revendication 1 ou 2, **caractérisée en ce que** le moyen de fermeture (7) de type bouchon est pourvu de multiples alésages de drain (8).

4. Pale de rotor d'éolienne selon l'une des revendications précédentes, **caractérisée en ce que** le moyen de fermeture (7) de type bouchon comprend un corps (15) cylindrique et, une tête (18) préférablement en forme de lentille, avec le au moins un alésage de drain (8) s'étendant à travers le corps (15) et la tête (18).

5. Pale de rotor d'éolienne selon la revendication 4, **caractérisée en ce que** les multiples alésages de drain (8) sont disposés dans la tête (18), tandis que le corps (15) cylindrique comprend uniquement un alésage central communiquant avec les multiples alésages de drain (8).

6. Pale de rotor d'éolienne selon les revendications 4 ou 5, **caractérisée en ce que** le moyen de fermeture (7), lorsqu'il est monté, s'engage avec sa tête (18) dans un renfoncement (22) formé dans la surface externe (19) du corps de pale (2).

7. Pale de rotor d'éolienne selon l'une des revendications 4 à 6, **caractérisée en ce qu'**un matériau de fixation et/ou d'étanchéité (25) est agencé au fond de la tête (18).

8. Pale de rotor d'éolienne selon l'une des revendications 4 à 7, **caractérisée en ce que** le corps (15) cylindrique comprend une ou plusieurs fentes (23) s'étendant axialement.

9. Pale de rotor d'éolienne selon l'une des revendications précédentes, **caractérisée en ce que** le au moins un alésage de drain (8) est au moins partiellement rempli d'un moyen (24) de réduction de bruit et perméable à l'eau.

10. Pale de rotor d'éolienne selon la revendication 9, **caractérisée en ce que** le moyen (24) est un élément en mousse.

11. Pale de rotor d'éolienne selon l'une des revendications précédentes, **caractérisée en ce que** le moyen d'engagement (16) comprend au moins un moyen d'encliquetage ou un moyen de serrage effectuant un serrage vers l'intérieur de l'alésage de drain (8) ou effectuant un serrage au niveau de l'épaulement interne de l'alésage de drain (8).

12. Pale de rotor d'éolienne selon l'une des revendications précédentes, **caractérisée en ce que** le moyen de fermeture (7) est constitué d'un polymère.

13. Éolienne, comprenant un rotor (31) ayant une ou plusieurs pales de rotor (1) selon l'une des revendications précédentes.
